(19) Europäisches Patentamt / European Patent Office / Office européen des brevets

(11) **EP 2 040 113 A2**

(12) **EUROPEAN PATENT APPLICATION**

(43) Date of publication:
**25.03.2009 Bulletin 2009/13**

(51) Int Cl.:
*G02F 1/13357* (2006.01)    *G02B 5/02* (2006.01)
*B65D 71/08* (2006.01)    *B65D 85/38* (2006.01)

(21) Application number: **08016561.6**

(22) Date of filing: **19.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.09.2007 JP 2007246294**

(71) Applicant: **Sony Corporation
Tokyo 108-0075 (JP)**

(72) Inventors:
• **Ohta, Eiji**
  **Tokyo, 108-0075 (JP)**
• **Hosoya, Ken**
  **Tokyo, 108-0075 (JP)**
• **Yamakita, Shigehiro**
  **Tokyo, 108-0075 (JP)**
• **Shinkai, Shogo**
  **Tokyo, 108-0075 (JP)**
• **Kakinuma, Masayasu**
  **Tokyo, 108-0075 (JP)**
• **Ishimori, Taku**
  **Tokyo, 108-0075 (JP)**

(74) Representative: **Müller - Hoffmann & Partner
Patentanwälte
Innere Wiener Strasse 17
81667 München (DE)**

(54) **Optical element package using a heat shrinkable film for a backlight unit of a liquid crystal display**

(57)    An optical element package includes at least one optical element (24a,24b,24c,24d); a supporting member (23a) that supports the optical element; and a packaging component (22) having shrinkability that packages the optical element and the supporting member. The supporting member has two main surfaces having a rectangular shape, and an angle formed between an orientation axis of a main surface portion of the packaging component and a side surface of the supporting member is 8° or less.

A uniaxially or biaxially stretched sheet or film is preferably used as the packaging component (22). In the case where such a sheet or film is used, the packaging component (22) can be shrunk in the stretching direction by applying heat.

One or more openings (22c) may be provided at one or more positions corresponding to corners (21b) of the optical element composite (21).

Furthermore, the slope of residual shrinkage of the packaging component (22) can be measured.

FIG. 6B

**Description**

CROSS REFERENCES TO RELATED APPLICATIONS

The present invention contains subject matter related to Japanese Patent Application JP 2007-246294 filed in the Japanese Patent Office on September 21, 2007, the entire contents of which are incorporated herein by reference.

BACKGROUND OF THE INVENTION

1. Field of the Invention

The present invention relates to an optical element package, a backlight incorporating the optical element package, and a liquid crystal display incorporating the optical element package. In particular, it relates to an optical element package that improves display characteristics of a liquid crystal display.

2. Description of the Related Art

In the related art, many optical elements are used for the purpose of improving viewing angle, luminance, etc. These optical elements are used in forms of films and sheets, such as diffuser films and prism sheets.

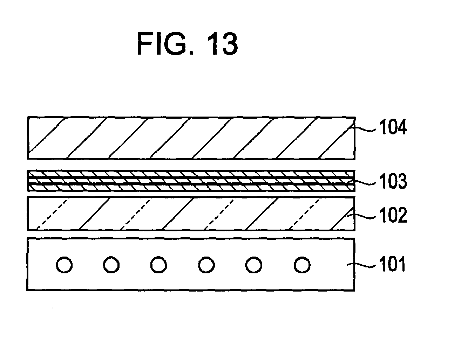

Fig. 13 shows a structure of a liquid crystal display of a related art. As shown in Fig. 13, the liquid crystal display includes a lighting device 101 that emits light, a diffuser plate 102 that diffuses the light emitted from the lighting device 101, a plurality of optical elements 103 that, for example, condense or diffuse the light diffused by the diffuser plate 102, and a liquid crystal panel 104.

Under the recent trends of increasing image display size, the size and weight of optical elements are also showing a tendency to increase. As the size and weight of optical elements increase, the stiffness of optical elements becomes deficient and deformation of optical elements occurs. Such deformation of optical elements affects the optical directivity toward the display surface, resulting in a serious problem of luminance nonuniformity.

In this respect, increasing the thickness of optical elements has been suggested to overcome the stiffness deficiency of optical elements. However, this proposal increases the thickness of liquid crystal displays and spoils the advantage of the liquid crystal display, which is it is thin and light-weight. To overcome this drawback, bonding of optical elements to each other with a transparent adhesive has been suggested so that the stiffness deficiency of sheet- or film-shaped optical elements (for example, refer to Japanese Unexamined Patent Application Publication No. 2005-301147) can be resolved.

SUMMARY OF THE INVENTION

However, according to the aforementioned proposal of bonding the optical elements to each other, the thickness of the liquid crystal still increases because a transparent adhesive is used for bonding, although the increase in thickness is not as large as in the proposal of increasing the thickness of the optical elements themselves. Furthermore, the transparent adhesive may degrade the display characteristics of the liquid crystal display.

Accordingly, it is desirable to provide an optical element package that suppresses an increase in thickness of the liquid crystal display, overcomes stiffness deficiency of optical elements, and suppresses degradation of display characteristics of the liquid crystal display; a backlight incorporating such an optical element package; and a liquid crystal display incorporating such an optical element package.

The inventors of the present invention have conducted extensive studies to suppress an increase in thickness of the liquid crystal display and overcome stiffness deficiency of optical elements while suppressing degradation of display characteristics of a liquid crystal display. As a result, the inventors have invented an optical element package including an optical element, a supporting member, and a packaging component that packages the optical element and the supporting member.

However, the findings of the inventors have also shown that when a shrinkable packaging component is used in the optical element package described above, the packaging component may sag or wrinkle due to insufficient shrinking caused by nonuniform shrinkability of the packaging component. As a result, luminance nonuniformity occurs in a surface light source, and the image quality of the liquid crystal display is degraded thereby.

The inventors then conducted investigations to suppress degradation of image quality caused by luminance nonuniformity in the optical element package.

Based on the studies, the inventors have discovered that there is a limit to the orientation axis of the shrinkable packaging component with respect to the optical element and supporting member to be contained in the packaging component.

An embodiment of the present invention provides an optical element package including at least one optical element; a supporting member that supports the at least one optical element; and a packaging component having shrinkability that packages the at least one optical element and the supporting member. The supporting member has two main surfaces having a rectangular shape, and an angle formed between an orientation axis of a main surface portion of the packaging component and a side surface of the supporting member is 8° or less.

According to this embodiment, since the at least one optical element and the supporting member are packaged in the packaging component, the the at least one optical element and the supporting member can be integrated. Thus, the presence of the supporting member compensates for the insufficient strength of the otpical element. Moreover, in this embodiment, the orientation axis of the shrinkable packaging component is controlled with respect to the optical elements and the supporting member to be packaged. Thus, luminance nonuniformity cased by sagging, nonuniformity and wrinckling of the packaging component can be suppressed and the degradation of image quality can be suppressed.

Another embodiment provides an optical element package including at least one optical element; a supporting member that supports the at least one optical elements; and a packaging member having shrinkability that packages the at least one optical element and the supporting member. IN this embodiment, tanθ = Δm/L satisfies the relationship:

$$-0.005 \leq \tan\theta = \Delta m/L \leq 0.005$$

where L is a length of one side of the packaging component and Δm is a residual shrinkage deviation of a side intersecting the side having the length L.

According to this embodiment, since the at least one optical element and the supporting member are packaged in the packaging component, the the at least one optical element and the supporting member can be integrated. Thus, the presence of the supporting member compensates for the insufficient strength of the otpical element. Moreover, in this embodiment, the residual shrinkage deviatioan of the shrinkable packaging component is controlled with respect to the optical elements and the supporting member to be packaged. Thus, luminance nonuniformity cased by sagging, nonuniformity and wrinckling of the packaging component can be suppressed and the degradation of image quality can be suppressed.

Accordingly, an increase in thickness of the liquid crystal display can be suppressed and degradation of display characteristics of the liquid crystal display can be suppressed while overcoming stiffness deficiency of optical elements.

Moreover, luminance nonuniformity cased by sagging, nonuniformity and wrinckling of the packaging component can be suppressed and the degradation of image quality can be suppressed.

BRIEF DESCRIPTION OF THE DRAWINGS

Fig. 1 is a schematic diagram showing one example of a structure of a liquid crystal display according to a first embodiment;
Fig. 2A is a schematic plan view showing the direction of an orientation axis of a packaging member in a first region and Fig. 2B is a schematic plan view showing the direction of an orientation axis of a packaging member in a second region;
Fig. 3 is a schematic cross-sectional view showing one example of a structure of an optical element package according to a first embodiment;
Fig. 4 is a schematic cross-sectional view of a first example of a joint of a packaging component;
Fig. 5 is a schematic cross-sectional view of a second example of a joint of a packaging component;
Fig. 6A is a plan view showing an example of a structure of an optical element package according to a second embodiment and Fig. 6B is a perspective view showing the example of the structure of the optical element package according to the second embodiment;
Fig. 7 is a schematic cross-sectional view showing one example of a structure of a backlight according to a third embodiment;
Fig. 8 is a schematic cross-sectional view showing another example of a structure of a backlight according to a fourth embodiment;
Fig. 9 is a perspective view showing a first example of a structure of an optical element package according to a fifth embodiment;
Fig. 10 is a perspective view showing a second example of a structure of an optical element package according to the fifth embodiment;
Fig. 11 is a perspective view showing a third example of a structure of an optical element package according to the fifth embodiment;

Figs. 12A and 12B are step diagrams illustrating a method for making the optical element package according to the fifth embodiment; and

Fig. 13 is a schematic diagram showing a structure of a liquid crystal display of a related art.

DESCRIPTION OF THE PREFERRED EMBODIMENTS

Embodiments of the present invention will now be described with reference to the drawings. In all drawings of the embodiments described below, the same or corresponding components are represented by the same reference symbols.

1. First Embodiment

1.1 Structure of liquid crystal display

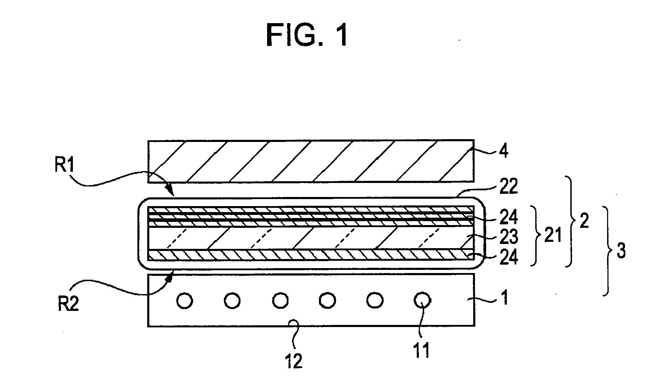

Fig. 1 shows one example of a structure of a liquid crystal display according to a first embodiment. As shown in Fig. 1, this liquid crystal display includes a backlight 3 that emits light and a liquid crystal panel 4 that displays an image on the basis of light emitted from the backlight 3. The backlight 3 includes a lighting device 1 that emits light and an optical element package 2 that improves the characteristics of light emitted from the lighting device 1 and emits light toward the liquid crystal panel 4. In the description below, in all optical components such as the optical element package 2, a surface which light from the lighting device 1 enters is referred to as "incoming surface", a surface from which light that has entered the incoming surface is emitted is referred to as "outgoing surface", and a surface positioned between the incoming surface and the outgoing surface is referred to as "end surface". The incoming surface and the outgoing surface are sometimes collectively referred to as "main surfaces".

The lighting device 1 is, for example, a direct-under-type lighting device and includes at least one light source 11 that emits light and a reflector plate 12 that reflects light emitted from the light source 11 and directs the light toward the liquid crystal panel 4. Examples of the light source 11 include cold cathode fluorescent lamps (CCFLs), hot cathode fluorescent lamps (HCFLs), organic electro luminescence (OEL), inorganic electro luminescence (IEL), and light-emitting diodes (LEDs). The reflector plate 12 is provided to cover the under side and lateral sides of at least one light source 11 so that the light emitted from the at least one light source 11 toward the under side and lateral sides of the light source 11 is reflected by the reflector plate 12 and directed toward the liquid crystal panel 4.

The optical element package 2, for example, includes at least one optical element 24 that conducts processing, such as condensing and diffusing, of light emitted from the lighting device 1 so as to change the characteristics of the light; a supporting member 23 that supports the at least one optical element 24; and a packaging component 22 that packages and integrates the at least one optical element 24 and the supporting member 23. At least one of the incoming surface and the outgoing surface side of the supporting member 23 is provided with the optical element 24. In the description below, a stack of the supporting member 23 and the at least one optical element 24 is referred to as an "optical element composite 21".

The number and type of the optical element 24 are not particularly limited and may be adequately selected according to the characteristics of the liquid crystal display desired. For example, at least one functional layer may be provided as the at least one optical element 24. Alternatively, the optical element composite 21 may be without the supporting member 23 and thus may be constituted by the optical elements 24 and the packaging component 22 only. Examples of the optical element 24 include a light-diffusing element, a light-condensing element, a reflective polarizer, a polarizer, and a light-splitting element. The optical element 24 may be film-, sheet-, or plate-shaped. The thickness of the optical element 24 is preferably 5 to 3000 $\mu$m and more preferably 25 to 1000 $\mu$m. Compared to the cases where only the optical elements 24 are stacked, the thickness of the optical element 24 can be reduced by about 20 to 50 percent by packaging together with the supporting member 23.

The supporting member 23 is, for example, a transparent plate that transmits light emitted from the lighting device 1 or an optical plate that conducts processing, such as condensing or diffusing, of light emitted from the lighting device 1 so as to change the characteristics of the light. Examples of the optical plate include a diffuser plate, a phase plate, and a prism plate. The thickness of the supporting member 23 is, for example, 1000 to 50000 $\mu$m. The supporting member 23 is, for example, composed of a polymer material and preferably has a transmittance of 30% or more. The order of stacking the optical elements 24 and the supporting member 23 are selected according to the functions of the optical elements 24 and the supporting member 23, for example. In the case where the supporting member 23 is a diffuser plate, the supporting member 23 is provided at the side which light from the lighting device 1 enters. In the case where the supporting member 23 is a reflective polarizer plate, the supporting member 23 is provided at the side from which light is emitted toward the liquid crystal panel 4. The shapes of the incoming surfaces and the outgoing surfaces of the optical element 24 and the supporting member 23 are selected according to the shape of the liquid crystal panel 4. For example, the surfaces may be rectangular with vertical sides having a different length from horizontal sides (aspect ratio is not equal to 1). The supporting member 23 preferably has adequate stiffness. A material having a modulus of elasticity of about 1.5 GPa or higher at room temperature is suitable as the material for the supporting member 23. Examples of such a material include polycarbonates, polymethyl methacrylates, polystyrenes, cycloolefin resins (e.g. Zeonor (trade name)), and glass.

The main surfaces of the optical element 24 and the supporting member 23 are preferably processed to impart features or preferably contain fine particles to reduce scratching and friction. If necessary, one or more additives such as a photostabilizer, a UV absorber, an anti-static agent, a flame retarder, an antioxidant, or the like may be added to the optical element 24 and the supporting member 23 so that the optical element 24 and the supporting member 23 have UV-absorbing function, infrared-absorbing function, and/or anti-static function. The optical element 24 and the supporting member 23 may be subjected to a surface treatment such as an anti-reflection treatment (AR treatment) or an anti-glare treatment (AG treatment) so as to reduce the diffusion of the reflected light or reduce the reflected light itself. The surfaces of the optical element 24 and the supporting member 23 may be imparted with UV- or infrared-reflecting function.

The packaging component 22 is, for example, a single layer film or sheet or a multilayer film or sheet having transparency. The packaging component 22 has, for example, a shape of a bag and all surfaces of the optical element composite 21 are covered with the packaging component 22. Alternatively, the packaging component 22 may be constituted by films laminated with the optical element composite 21 therebetween and bonded with each other at edges so that two, three, or four sides of the packaging component 22 are closed. Specific examples of the packaging component 22 with two sides closed include a packaging component constituted by a strip-shaped film or sheet with ends in the longitudinal direction joined to each other and a packaging component constituted by two superimposed rectangular films or sheets joined at opposing two sides. Specific examples of the packaging component 22 with three sides closed include a packaging component constituted by a strip-shaped film or sheet folded such that two end portions in the longitudinal direction meet each other and then closed at two sides, and a packaging component constituted by two superimposed rectangular films or sheets with three sides joined. Specific examples of the packaging component 22 with four sides closed include a packaging component constituted by a strip-shaped film or sheet folded such that two end potions in the longitudinal direction meet each other and then closed at three sides, and a packaging member constituted by two superimposed rectangular films or sheets with four sides joined. In the description below, of the surfaces of the packaging component 22, a surface at the optical-element-composite-21-side is referred to as an "inner surface" and a surface opposite to the inner surface is referred to as an "outer surface". In the packaging component 22, a region at the incoming surface side at which light from the lighting device 1 enters is referred to as a "first region R1", and a region at the outgoing surface side at which light emitted from the lighting device 1 is emitted toward the liquid crystal panel 4 is referred to as a "second region R2".

The thickness of the packaging component 22 is, for example, 5 to 5000 $\mu$m. The thickness is preferably 10 to 500 $\mu$m and more preferably 15 to 300 $\mu$m. If the packaging component 22 is thick, then a decrease in luminance and nonuniform shrinkage of the heat sealing portion (sealing portion) of the packaging component 22 occur, for example. Moreover, adhesion of the packaging component 22 to the optical element composite 21 may become insufficient, and wrinkling may occur. Thus, when the packaging component 22 is mounted on an actual display, distortion may occur and image quality may be degraded. The thickness of the packaging component 22 may be different between the incoming surface side and the outgoing surface side. The packaging component 22 may incorporate aggregates to improve the stiffness.

In the case where the packaging component 22 has optical anisotropy, the optical anisotropy is preferably small. In particular, the retardation is preferably 50 nm or less and more preferably 20 nm or less. A uniaxially or biaxially stretched sheet or film is preferably used as the packaging component 22. In the case where such a sheet or film is used, the packaging component 22 can be shrunk in the stretching direction by applying heat; thus, the adhesion between the packaging component 22 and the optical element composite 21 can be increased.

The packaging component 22 preferably has shrinkability. This is because thermal shrinkability can be exhibited by re-applying heat to the thermally stretched packaging component 22. It is also possible to stretch end surfaces of the packaging component 22, inserting the supporting member 23 and the optical element 24 into the packaging component 22, and heat-sealing the end portions so that the packaging and shrinkage can be achieved by elasticity.

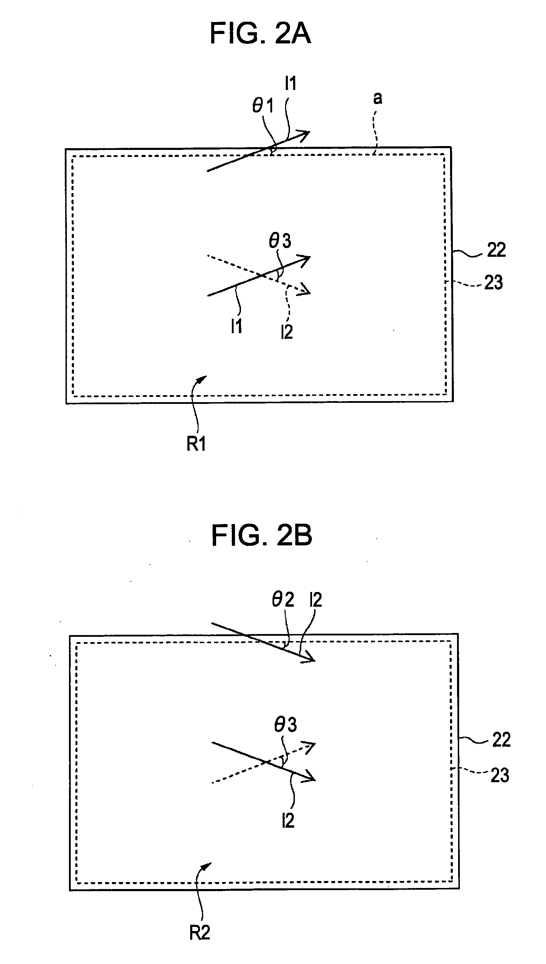

Fig. 2A shows the direction of an orientation axis of the packaging component 22 in the first region R1. Fig. 2B shows the direction of an orientation axis of the packaging component 22 in the second region R2. In the packaging component 22, the first region R1 and the second region R2 respectively have orientation axes 11 and 12. The orientation axis 11 of the first region R1 and a side surface a of the supporting member 23 define an angle $\theta 1$. The orientation axis 12 of the second region R2 and the side surface a of the supporting member 23 define an angle $\theta 2$. The angles $\theta 1$ and $\theta 2$ are each preferably 8° or less and more preferably 3.5° or less. In the case where the angles are over this numerical range, since the shrinkability of the packaging component 22 is not uniform, the packaging component 22 does not shrink sufficiently, causing sagging and wrinkling. As a result, luminance nonuniformity occurs in a surface light source, and the image quality of the liquid crystal display is degraded thereby.

The orientation axis 11 of the first region R1 of the packaging component 22 and the orientation axis 12 of the second region R2 of the packaging component 22 define an angle θ3. The angle θ3 is preferably 16° or less and more preferably 7° or less. In the case where the angle is over this numerical range, since the shrinkability of the packaging component 22 is not uniform, the packaging component 22 does not shrink sufficiently, causing sagging and wrinkling. As a result, luminance nonuniformity occurs in a surface light source, and the image quality of the liquid crystal display is degraded thereby.

In the case where the packaging component 22 is composed of a transparent resin material, the orientation axes can be measured by a retardation method of measuring the slope observed when polarized waves are applied to a specimen cut out from the packaging component 22, or with a transmission microwave molecular orientation analyzer or the like, for example.

The angle defined by the long side of the film and the orientation axis may be changed by cutting out a film while rotating the long side direction of the original film by a desired angle, wrapping the supporting member and optical element with the cut-out film, and heat-sealing and heat-shrinking the end portions of the film. Alternatively, since the orientation axis direction of a central portion of an original film of the shrinkable film is different from that of an end portion, the angle can be changed by changing the position at which the shrinkable film is taken. For example, in a shrinkable film taken from the center portion, deviation can be reduced by arranging the orientation axis to be parallel to the axis of the shrinkable film, and thus the orientation axis and the axis of the shrinkable film are easily aligned. In contrast, in a shrinkable film taken from an end portion of the original film of the shrinkable film, the deviation between the film longitudinal direction and the orientation axis is large. Thus, if the components to be packaged by the film are arranged to be parallel to the longitudinal direction of the film, the deviation between the orientation axis and the components becomes large. This can be overcome by aligning the direction of the components to be packaged with the direction of the orientation axis and heat-sealing and heat-shrinking end portions.

Provided that the length of one side of the packaging component 22 is represented by L and the residual shrinkage deviation of the side intersecting the side having the length L is represented by Δm, tanθ = Δm/L satisfies the following relationship:

$$-0.005 \leq \tan\theta = \Delta m/L \leq 0.005$$

When this numerical range is satisfied, sagging and wrinkling of the packaging component 22 can be suppressed.

The material of the packaging component 22 is preferably a heat shrinkable polymer material and more preferably a polymer material that shrinks by heating at normal temperature up to 85°C since the temperature inside the liquid crystal display reaches about 70°C at maximum. The material is not particularly limited as long as the relationship described above is satisfied. Examples of such a material include one or a mixture of polystyrene (PS), a copolymer of polystyrene and butadiene, polypropylene (PP), polyethylene (PE), unoriented polyethylene terephthalate (PET), polycarbonate (PC), a polyester resin such as polyethylene naphthalate (PEN), a vinyl-bonding compound such as polyvinyl alcohol (PVA), a cycloolefin resin, a urethane resin, a vinyl chloride resin, a natural rubber resin, and a synthetic rubber resin.

The thermal shrinkage ratio of the packaging component 22 is preferably selected by taking into account the size of the supporting member 23 and the optical element 24 to be packaged, the material, and the operation environment of the optical element composite 21. In particular, the shrinkage ratio at 85°C is preferably within the range of 0.2% to 100%, more preferably within the range of 0.5% to 20%, and yet more preferably within the range of 0.5% to 10%. At a shrinkage ratio less than 0.2%, the adhesion between the packaging component 22 and the optical element 24 may be degraded. At a shrinkage ratio exceeding 100%, the heat shrinkability may become nonuniform in-plane, and the optical element may shrunk. The deflection temperature under load of the packaging component 22 is preferably 85°C or more. This is because degradation of the optical characteristics of the optical element package 2 caused by heat generated from the light sources 11 can be suppressed. The drying loss of the material of the packaging component 22 is preferably 2% or less. The refractive index of the material of the packaging component 22 (refractive index of the packaging component 22) is preferably 1.6 or less and more preferably 1.55 or less. However, in the case where an optical functional layer is formed on the packaging component 22 by feature impartation or feature transfer impartation, the refractive index is preferably higher to enhance the effect of the optical functional layer. For example, the refractive index is preferably 1.5 or more, more preferably 1.57 or more, and most preferably 1.6 or more, and is preferably adjusted to a desirable refractive index range by the functional layer. This is because a higher refractive index enhances optical effects, such as a condensing effect, a diffusing effect, or the like.

The packaging component 22 preferably contains at least one type of filler. This is because incorporation of a filler prevents optical element packages from adhering to each other when the optical element packages are superimposed. Moreover, incorporation of the filler also prevents the packaging component 22 and the components inside the packaging component 22 from adhering to one another due to excessively close contact. The filler may be at least one filler selected from organic fillers and inorganic fillers. For example, the material of the organic filler may be at least one selected from the group consisting of acrylic resins, styrene resins, fluorine, and voids. For example, the material of the inorganic filler may be at least one selected from the group consisting of silica, alumina, talc, titanium oxide, and barium sulfate. The filler may be needle-like, spherical, ellipsoidal, plate-like, or scale-like in shape, for example. At least one type of diameter is selected as the diameter of the filler.

Instead of using a filler, features may be formed in the surface of the packaging component 22. Examples of methods for forming features in the surface include a method of transferring desired diffusing features onto a surface of a shrinkable film or sheet for forming the packaging component 22 during preparation of the film or sheet, and a method of transferring desired diffusing features under heat and/or pressure onto a surface of a shrinkable film or sheet already prepared.

If necessary, one or more additives such as a photostabilizer, a UV absorber, an anti-static agent, a flame retarder, and/or an antioxidant may be added to the packaging component 22 so that the packaging component 22 has a UV-absorbing function, an infrared-absorbing function, and/or an anti-static function. The packaging component 22 may be subjected to a surface treatment such as an anti-reflection treatment (AR treatment) or an anti-glare treatment (AG treatment) so as to reduce the diffusion of the reflected light or reduce the reflected light itself, for example. Furthermore, a function of transmitting light in a specific wavelength region, such as UV-A light (about 315 to 400 nm), may be imparted.

The liquid crystal panel 4 displays information by space-time modulation of light supplied from the light sources 11. Examples of the liquid crystal panel 4 include panels of various display modes such as twisted nematic (TN) mode, super twisted nematic (STN) mode, vertically aligned (VA) mode, in-plane switching (IPS) mode, optically compensated birefringence (OCB) mode, ferroelectric liquid crystal (FLC) mode, polymer dispersed liquid crystal (PDLC) mode, and phase change guest host (PCGH) mode.

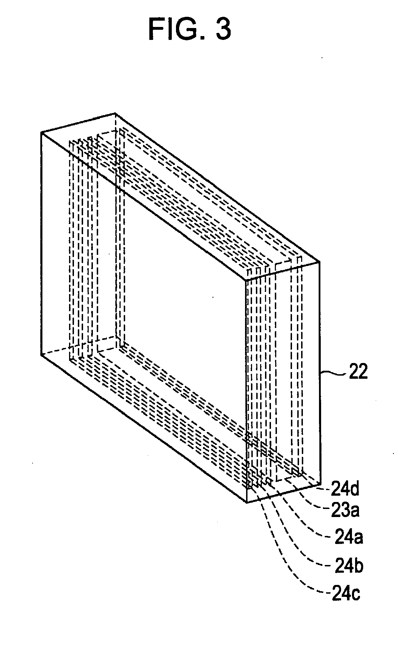

An example of the structure of the optical element package 2 will now be described in detail with reference to Figs. 3 to 5.

Fig. 3 shows one example of a structure of an optical element package according to the first embodiment. As shown in Fig. 3, the optical element package 2 includes, for example, a diffuser plate 23a, which is a supporting member; a diffuser film 24a, a lens film 24b, a reflective polarizer 24c, and a light control film 24d which are optical elements; and the packaging component 22 that packages and integrates these components. In this example, the diffuser plate 23a, the diffuser film 24a, the lens film 24b, the reflective polarizer 24c, and the light control film 24d constitute the optical element composite 21. The main surfaces of the optical element composite 21 have, for example, rectangular shapes with an aspect ratio not equal to 1. The packaging component 22 has a shape of a bag, and all surfaces of the optical element composite 21 are covered with the packaging component 22. The packaging component 22 is joined at an end surface of the optical element composite 21, for example.

The diffuser plate 23a is provided above the at least one light source 11 and diffuses light emitted from the light source 11 and light reflected by the reflector plate 12 to render the luminance uniform. The diffuser plate 23a may be a plate having asperities for diffusing light, a plate containing fine particles having a refractive index different from that of the main constituent material of the diffuser plate 23a, or a plate containing hollow fine particles, or may be a plate having or containing at least two selected from the asperities, the fine particles, and the hollow fine particles. The fine particles may be at least one filler selected from organic fillers and inorganic fillers. The asperities, fine particles, and hollow fine particles described above are provided in the outgoing surface of the diffuser film 24a, for example. The light transmittance of the diffuser plate 23a is, for example, 30% or more.

The diffuser film 24a is disposed on the diffuser plate 23a to further diffuse the light diffused by the diffuser plate 23a. The diffuser film 24a may be a film having surface asperities for diffusing light, a film containing fine particles having a refractive index different from that of the main constituent material of the diffuser film 24a, or a film containing hollow fine particles, or may be a film having or containing at least two selected from the surface asperities, the fine particles, and the hollow fine particles. The fine particles may be at least one filler selected from organic fillers and inorganic fillers. The asperities, fine particles, and hollow fine particles described above are provided in the outgoing surface of the diffuser film 24a, for example.

The lens film 24b is provided on the diffuser film 24a to improve the directivity of the light or the like. Fine prism lens columns, for example, are provided on the outgoing surface of the lens film 24b. The cross-sectional shape of each prism lens in the column direction is preferably substantially triangular with rounded apexes, for example. In this manner, the cutoff can be improved and wider viewing angle can be achieved.

The diffuser film 24a and the lens film 24b are each composed of a polymer material, for example, and has a refractive index of 1.5 to 1.6, for example. The material of the optical element 24 or the optical functional layer provided to the optical element 24 is preferably a thermoplastic resin, an ionizing radiation curable resin that cures by irradiation of light or an electron beam, a thermosetting resin that cures by heat, or a UV-curable resin that cures by ultraviolet, for example.

The reflective polarizer 24c is provided on the lens film 24b so that, of two polarized components of light having directivity increased by the lens film 24b, the polarized components being orthogonal to each other, only one component is allowed to pass while the other is reflected. The reflective polarizer 24c is, for example, a composite such as an organic multilayer film, an inorganic multilayer film, or a liquid crystal multilayer film. Alternatively, the reflective polarizer 24c may include a component having a different refractive index. Alternatively, the reflective polarizer 24c may be provided with a diffusing layer and/or lens.

The light control film 24d has an incoming surface and an outgoing surface, at least one of which is provided with an optical functional layer having asperities. The light control film 24d is provided to control the light source uniformity of the CCFL or LED. For example, the pattern of the asperities may be constituted by a series of single shapes, such as prismatic, arc-like, hyperbolic, parabolic, or triangular shapes, or a series of a combination of these shapes. If necessary, the light control film 24d may have a flat surface or may be a film similar to the diffuser film 24a.

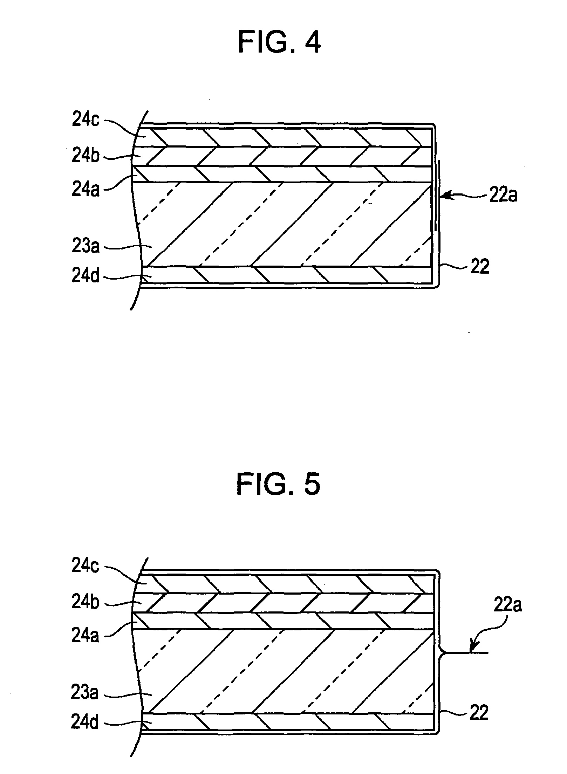

Referring now to Figs. 4 and 5, an example of a joint of the packaging component 22 is described.

Fig. 4 shows a first example of a joint of a packaging component. In this first example, as shown in Fig. 4, the joint is positioned at a side surface of the optical element composite 21. At this joint, end portions of the packaging component 22 are joined with each other by bringing the inner surface side to contact the outer surface side. In other words, the end portions of the packaging component 22 lie along the side surface of the optical element composite 21.

Fig. 5 shows a second example of a joint of a packaging component. In this second example, as shown in Fig. 5, the joint is also positioned at a side surface of the optical element composite 21. At this joint, end portions of the packaging component 22 are joined with each other by bringing the inner surface sides to contact with each other. In other words, the end portions of the packaging component 22 extend vertically with respect to the side surface of the optical element composite 21.

1-2. Method for making optical element package

An example of a method for making the optical element package 2 having the above-described structure will now be described. First, the diffuser plate 23a, the diffuser film 24a, the lens film 24b, and the reflective polarizer 24c are sequentially stacked on the light control film 24d in that order to prepare the optical element composite 21. Next, an original film of a heat shrinkable film is prepared and two rectangular films are cut out from this original film. At this stage, it is preferable to arrange the long side of each rectangular film and the orientation axis so that they form an angle of 8° or less.

Next, the two films are superimposed, and two or three sides thereof are, for example, heat-sealed to obtain a bag-shaped packaging component 22. Alternatively, the optical element composite 21 may be interposed between the two films and then at least two sides of end portions of the two films may be, for example, heat-sealed to obtain a bag-shaped packaging component 22. At this stage, it is preferable to control the angle defined by the orientation axes of the two films to be 16° or less. Next, the optical element composite 21 is inserted through an open end, and the open end is heat-sealed to seal the packaging component 22 to obtain the optical element package 2. Alternatively, the optical element composite 21 may be placed between two films or between two surfaces of a folded film, and then two, three, or four sides of the films or film may be heat-sealed to seal the packaging component 22 and to thereby prepare the optical element package 2. The optical element package 2 is then transferred into an oven or the like to shrink the packaging component 22 in a high temperature atmosphere.

As a result, a target optical element package is obtained.

According to the first embodiment, the optical elements 24 and the supporting member 23 are packaged with the packaging component 22. Thus, the stiffness deficiency of the optical element can be overcome while suppressing an increase in thickness of the optical element.

2. Second Embodiment

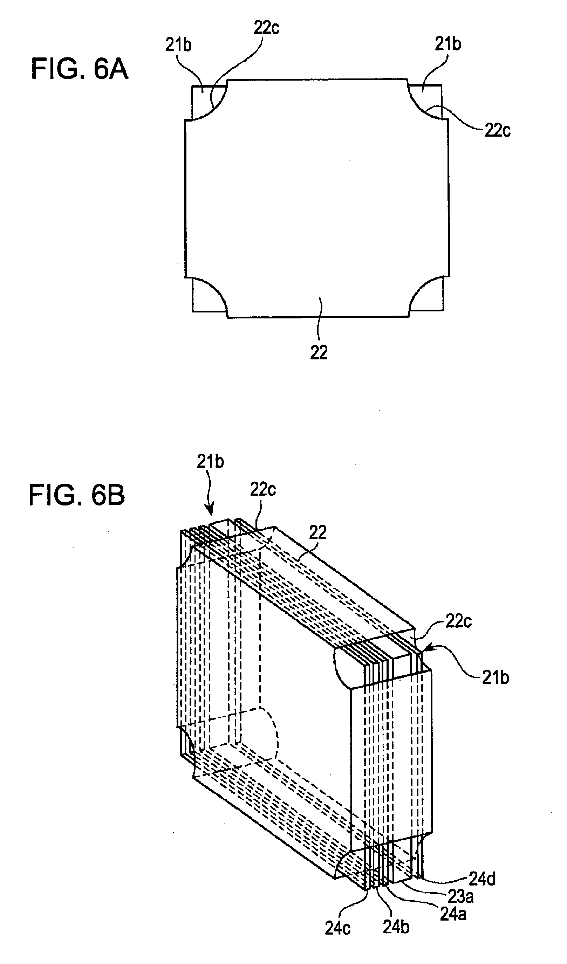

Fig. 6 shows one example of a structure of an optical element package according to the second embodiment. In the second embodiment, the packaging component 22 of the first embodiment is provided with one or more openings 22c. One or more openings 22c are respectively provided at one or more positions corresponding to corners 21a of the optical element composite 21, for example.

According to the second embodiment, since one or more openings 22c are provided in the packaging component 22, air inside the packaging component 22 can be evacuated through the openings 22c during shrinking operation of the packaging component 22 in making the optical element package 2. Accordingly, the packaging component 22 can be prevented from swelling or the like. If the packaging component 22 is mounted in an actual display and swelling occurs, distortion may occur and image quality may be degraded. The openings 22c can also suppress breaking of the packaging component 22. The openings 22c serve not only as outlets for air during heat shrinking but also as outlets for air at the time of swelling caused by heat and air generated from the optical element composite 21 when mounted in an actual liquid crystal display.

3. Third Embodiment

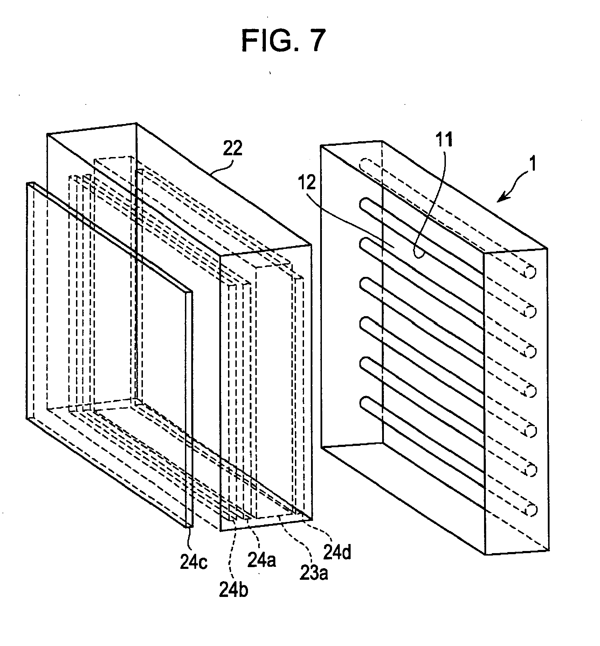

Fig. 7 shows one example of a structure of a backlight according to a third embodiment. In the third embodiment, the reflective polarizer 24c disposed directly below the second region R2 of the packaging component 22 in the first embodiment is replaced with a lens film 24b such as a prism sheet.

The lens film 24b is a type of an optical element including a transparent substrate having a patterned surface. The pattern to be formed in the surface is preferably a triangular pattern. The prism pattern formed on the film reflects and deflects the light emitted from the light sources 11 and thereby condenses the light. The lens film 24b used in the third embodiment is not particularly limited. For example, a BEF-series film produced by Sumitomo 3M can be used.

In order to suppress glaring of the lens film 24b, it is preferable to impart some degree of diffusibility to the second region R2 of the packaging component 22.

As shown in Fig. 7, the optical element package 2 and the reflective polarizer 24c, i.e., an optical element, are disposed in that order in the direction from the lighting device 1 to the liquid crystal panel 4. In the optical element package 2, the diffuser plate 23a, the diffuser film 24a, and the lens film 24b are packaged in the packaging component 22 and integrated.

4. Fourth Embodiment

According to a fourth embodiment, the packaging component 22 in the first embodiment is rendered a function of an optical element. In the packaging component 22, an optical functional layer is provided to at least one of the first region R1 and the second region R2. For example, the optical functional layer is provided on at least one of the inner surface and the outer surface of the packaging component 22. The optical functional layer conducts a desired processing on light coming in from the lighting device 1 so as to modify light to have desired characteristics. Examples of the optical functional layer include a diffusion functional layer having a function of diffusing the incoming light, a condensing functional layer having a function of condensing light, and a light source splitting functional layer having a function of the light control film 24d described above. In particular, the optical functional layer is provided with a structure such as a cylindrical lens, a prism lens, or a fry eye lens, for example. The structure such as a cylindrical lens or prism lens may be wobbled. A ultraviolet (UV)-cut functional layer that cuts ultraviolet, an infrared (IR)-cut functional layer that cuts infrared, or the like may be provided as the optical functional layer, for example.

Examples of the methods for making the optical functional layer of the packaging component 22 include a method of forming a diffusive functional layer by applying a resin material on the packaging component 22 and drying the applied resin material; a method of making a single-layer or multilayer film or sheet, which forms the packaging component 22, by extrusion molding or coextrusion molding of a resin material while adding diffusive particles to or forming voids in the resin material; a method for forming a diffusive functional layer, a condensing function layer such as a lens, or a light source-splitting function layer having a particular shape by transfer-forming a particular pattern in a resin material such as a UV-curable resin; a method in which a particular pattern is transferred onto a shrinkable film in the course of formation of the shrinkable film by taking into account the shrinkage ratio in advance and shrinkability is imparted by stretching; a method of forming a functional layer under heat and/or pressure after formation of a shrinkable film; and a method of forming small holes in a film either mechanically or by annealing such as by using a laser.

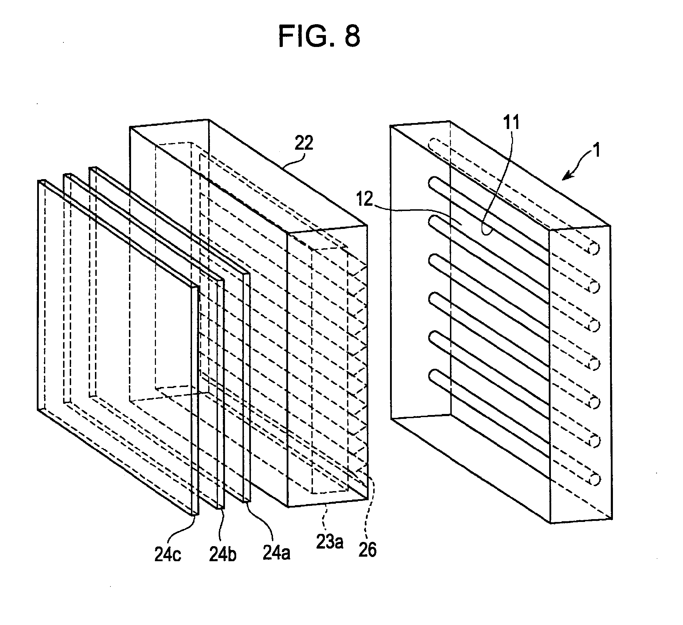

Fig. 8 shows one example of a structure of a backlight according to a fourth embodiment. As shown in Fig. 8, the diffuser plate 23a, the diffuser film 24a, the lens film 24b, and the reflective polarizer 24c are disposed in that order in the direction from the lighting device 1 to the liquid crystal panel 4. The diffuser plate 23a is packaged in the packaging component 22, and the incoming side inner surface of the packaging component 22 is provided with a structure 26 that has a nonuniformity eliminating function.

According to the fourth embodiment, at least one of the inner surface and the outer surface of the packaging component 22 is provided with the structure and the optical functional layer. Thus, the number of optical elements to be packaged by the packaging component 22 can be reduced. As a result, the optical element package 2 and the liquid crystal display can achieve further thickness reduction.

5. Fifth Embodiment

The packaging component 22 is strip-shaped, for example, and the end portions in the longitudinal direction are joined with each other preferably at a side surface of the optical element composite 21. Alternatively, the packaging component 22 may be cylindrical in shape and thus joint-free. A structure of the optical element package 2 in which the main surfaces of the optical element composite 21 are have a rectangle shape with an asperity not equal to 1 will now be described.

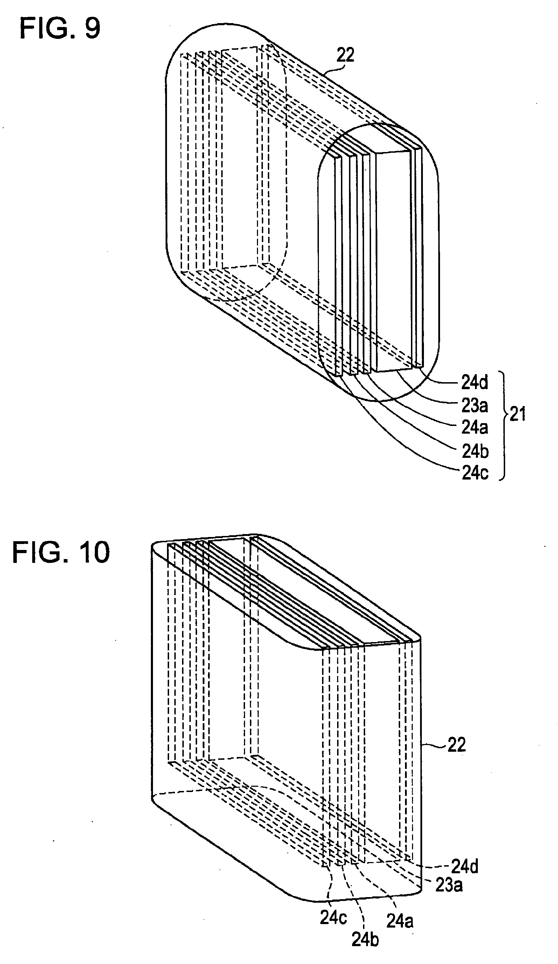

Fig. 9 shows a first example of a structure of an optical element package according to a fifth embodiment. As shown in Fig. 9, the incoming surface, the outgoing surface, and the two side surfaces at the long sides of the optical element composite 21 are wrapped with a strip-shaped packaging component 22, and the two side surfaces of the optical element composite 21 at the short sides are exposed. The end portions of the strip-shaped packaging component 22 in the longitudinal direction are joined with each other at a side surface of the optical element composite 21 at the long side, for example.

Fig. 10 shows a second example of a structure of an optical element package according to the fifth embodiment. As shown in Fig. 10, the incoming surface, the outgoing surface, and the two side surfaces at the short sides of the optical element composite 21 are wrapped with the strip-shaped packaging component 22, and the two side surfaces of the optical element composite 21 at the long sides are exposed. The end portions of the strip-shaped packaging component 22 in the longitudinal direction are joined with each other at a side surface of the optical element composite 21 at the short side.

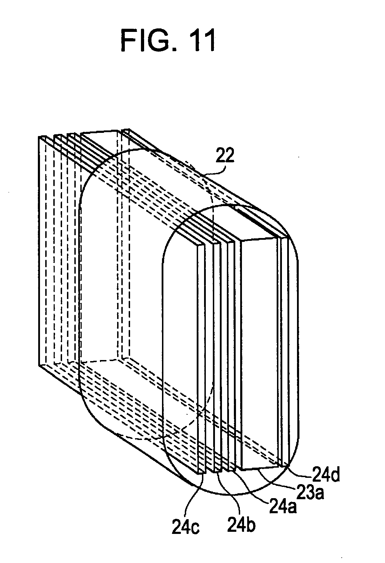

Fig. 11 shows a third example of a structure of an optical element package according to the fifth embodiment. As shown in Fig. 11, the central portion and its nearby portions of the optical element composite 21 are covered with the strip-shaped packaging component 22 and the two end portions of the optical element composite 21 at the short sides are exposed. The end portions of the strip-shaped packaging component 22 in the longitudinal direction are joined with each other at a side surface of the optical element composite 21 at the long side, for example.

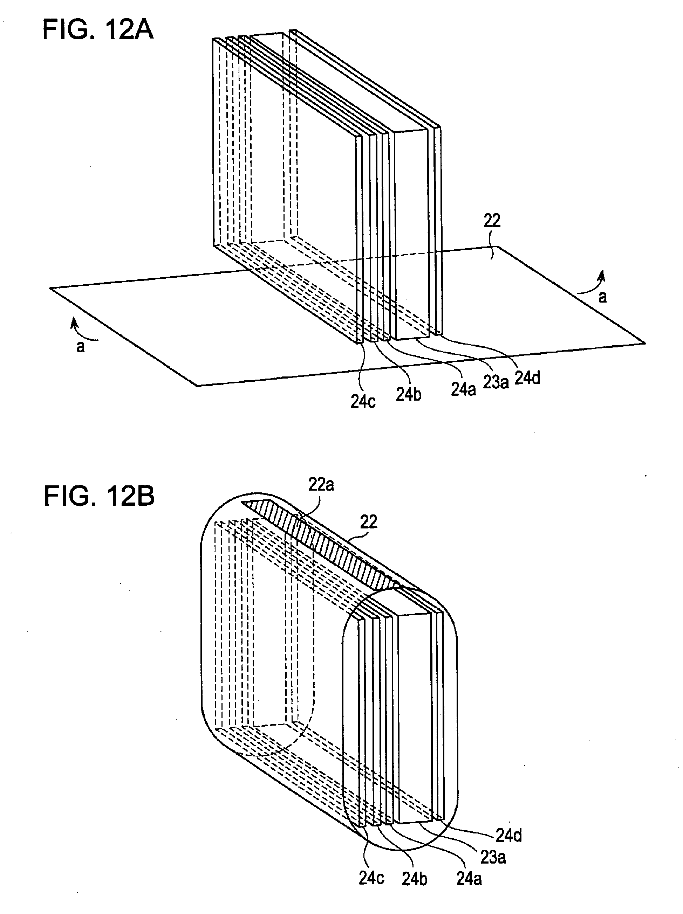

An example of a method for making the optical element package 2 having the above-described structure will now be described. First, as shown in Fig. 12A, a stack including one or more optical elements 24 and the supporting member 23 are placed on a strip-shaped packaging component 22, for example. Next, as shown by arrows a in Fig. 12A, two end portions of the strip-shaped packaging component 22 in the longitudinal direction are uplifted to wrap the stack of the one or more optical elements 24 and the supporting member 23 with the packaging component 22. Next, as shown in Fig. 12B, end portions of the packaging component 22 in the longitudinal direction are joined with each other at a joint 22a at a side surface of the stack, for example. Examples of the method for joining include bonding with an adhesive or by welding. Examples of the method for bonding with an adhesive include a method that uses a hot-melt adhesive, a thermosetting adhesive, a pressure-sensitive adhesive, an energy radiation-curable adhesive, a hydration-type adhesive, or a hygroscopic/rewettable adhesive. Examples of the bonding methods by welding include heat sealing, ultrasonic welding, and laser welding. Subsequently, if necessary, the packaging component 22 may be heated so that the packaging component 22 is heat-shrunk.

Alternatively, for example, the optical element package 2 may be made by inserting the stack of the one or more optical elements 24 and the supporting member 23 into a cylindrical packaging component 22 and heat-shrinking the packaging component 22 by applying heat as necessary. As a result, the target optical element package 2 is obtained.

EXAMPLES

The embodiments will now be specifically described by way of non-limiting examples below.

Samples 1 to 8

First, following optical elements and a supporting member were prepared. The optical elements and the supporting members were designed for a 32-inch television set and were each 410 mm × 710 mm in size.
Reflector polarizer (DBEFD, produced by 3M (thickness: 400 μm))
Lens sheet (Lens, polycarbonate melt-extruded product having a hyperboloidal surface, pitch: 200 μm, produced by Sony Corporation (thickness: 500 μm))
Diffuser sheet (BS-912 produced by Keiwa Inc. (thickness: 205 μm))
Diffuser plate (polycarbonate, produced by Teijin Chemicals Ltd. (thickness: 1500 μm)
Light control film (nonuniformity eliminating film (LCF), polycarbonate melt-extruded product having a hyperboloidal surface, pitch: 200 μm, thickness 200 μm)

Next, the diffuser plate, the diffuser sheet, the lens sheet, and the reflector polarizer were sequentially stacked in that order on the light control film to prepare an optical element composite. Next, an original film of a multilayer film including a polypropylene film and a polyethylene film was prepared and two rectangular films were cut out from this original film. During this process, the long side and the orientation axis of each rectangular film were arranged to form an angle of 1° to 10° as shown in Table 1 below. The angle between the long side and the orientation axis of the film was changed from one sample to another by cutting out film samples while rotating the film so that the long side direction was rotated by a desired angle.

Next, as shown in Table 1, the two films were superimposed, and three sides were heat-sealed while leaving one long side open. As a result, a bag-shaped packaging component was obtained. Next, the optical element composite was inserted into the packaging component from the open long side. The open long side was then heat-sealed to seal the packaging component. As a result, an optical element package was obtained. It should be noted that a shrinkage allowance of 40 mm was saved at the long sides and a shrinkage allowance of 23 mm was saved at the short sides of the packaging component. Here, "shrinkage allowance" refers to the difference in size between the supporting member and the packaging component and is a figure that does not include welding portions. Next, openings were formed at positions corresponding to the corners of the packaging component. The optical element package was transferred into an oven to shrink the packaging component at a temperature of 105°C. As a result, the optical element composite and the packaging component were closely adhered to each other, and the corners of the optical element composite were exposed in the openings formed in the corner portions of the packaging component.

As a result, a target optical element package was obtained.

Measurement of orientation axis

The orientation axes of the packaging components of Samples 1 to 8 obtained as above were measured as follows. First, a 100 mm × 100 mm square specimen was cut out from the packaging component in parallel to the supporting member of the optical element package. The specimen was analyzed with a retardation analyzer produced by Otsuka Electronics Co., Ltd., to measure the angle between the orientation axis and an edge of the specimen. The results are shown in Table 2.

Evaluation of warpage

The optical element package was placed on a platen, and the warpage was measured with a metal ruler. The results are shown in Table 1.

Evaluation of appearance

The appearance of the optical element package was visually observed and evaluated according to a three-rank standard below. The results are shown in Table 2.

    1: Deflection and wrinkling were observed.
    2: Slight deflection and wrinkling were observed.
    3: No deflection or wrinkling was observed.

Mounting test evaluation

A 32-inch liquid crystal television (LCDTV-J3000 produced by Sony Corporation) was prepared as a mount testing machine. The optical elements in the backlight unit of this liquid crystal television, namely, a diffuser plate, a diffuser sheet, a prism sheet, and a reflective polarizer sheet, were removed, and the optical element packages of Examples 1 to 6 and Comparative Examples 1 and 2 were mounted. The appearance of the panel display was evaluated by the following standard. The results are shown in Table 1.

5: No luminance nonuniformity was observed from directly front or at an angle of 60°.

4: No luminance nonuniformity was observed from directly front but slight nonuniformity was observed at an angle of 60°.

3: Very slight luminance nonuniformity was observed from directly front and moderate nonuniformity was observed at an angle of 60°.

2: Moderate nonuniformity was observed from directly front and nonuniformity was clearly observed at an angle of 60°.

1: Luminance nonuniformity was observed from directly front and at an angle of 60°.

Note that level 3 or above is a practical level.

Table 1

| | | Material | Packaging component shrinkage ratio (105°C) | | Deviation between packaging component crystal axis and the content of the packaging component (deg) | Deviation between crystal axes of opposing regions of packaging component (deg) | Warpage of optical element package (mm) | Optical element package appearance | Appearance as mounted in actual liquid crystal display |
|---|---|---|---|---|---|---|---|---|---|
| | | | MD (%) | TD (%) | | | | | |
| Sample 1 | | Polyolefin (PP/PE) | 11 | 13 | 1 | 2 | 0.5 | 3 | 5 |
| Sample 2 | | Polyolefin (PP/PE) | 8 | 12 | 3.5 | 7 | 1 | 3 | 5 |
| Sample 3 | | Polyolefin (PP/PE) | 9 | 10 | 8 | 16 | 2 | 2 | 4 |
| Sample 4 | | Polyolefin 12 (PP/PE) | 11 | 14 | 10 | 20 | 4 | 1 | 2 |
| Sample 5 | | Polyolefin (PP/PE) | 11 | 13 | 1 | 0 | 0.5 | 3 | 5 |
| Sample 6 | | Polyolefin (PP/PE) | 8 | 12 | 3.5 | 0 | 1 | 3 | 5 |
| Sample 7 | | Polyolefin (PP/PE) | 9 | 10 | 8 | 0 | 1 | 2 | 4 |
| Sample 8 | | Polyolefin (PP/PE) | 12 | 14 | 10 | 0 | 2 | 1 | 2 |

Table 1 shows the following.

The warpage of the optical element package can be adjusted to 1 mm or less, the appearance of the optical element package can be rated "3", and the appearance of a liquid crystal display onto which the optical element package is mounted can be rated "5" by adjusting the angle between the orientation axis of the main surface of the packaging component and the side surface of the optical element composite to 3.5° or less and by adjusting the angle between the orientation axes of the two main surfaces of the packaging component to 7° or less.

The warpage of the optical element package can be adjusted to 2 mm or less, the appearance of the optical element package can be rated "2" or higher, and the appearance of a liquid crystal display onto which the optical element package is mounted can be rated "4" or higher by adjusting the angle between the orientation axis of the main surface of the packaging component and the side surface of the optical element composite to 8° or less and by adjusting the angle between the orientation axes of the two main surfaces of the packaging component to 16° or less.

In view of the above, in order to suppress degradation of image quality of the liquid crystal display, the angle between the orientation axis of a main surface of the packaging component and a side surface of the optical element composite is 8° or less and preferably 3.5° or less, and the angle between the orientation axes of the two main surfaces of the packaging component is 16° or less and preferably 7° or less.

Sample 9

First, following optical elements and a supporting member were prepared. The optical elements and the supporting members were designed for a 32-inch television set and were each 410 mm × 710 mm in size.
Reflector polarizer (DBEFD, produced by 3M (thickness: 400 μm))
Lens sheet (Lens, polycarbonate melt-extruded product having a hyperboloidal surface, pitch: 200 μm, produced by Sony Corporation (thickness: 500 μm))

Diffuser sheet (BS-912 produced by Keiwa Inc. (thickness: 205 $\mu$m))
Diffuser plate (polycarbonate, produced by Teijin Chemicals Ltd. (thickness: 1500 $\mu$m)
Light control film (nonuniformity eliminating film (LCF), polycarbonate melt-extruded product having a hyperboloidal surface, pitch: 200 $\mu$m, thickness 200 $\mu$m)

Next, the diffuser plate, the diffuser sheet, the lens sheet, the reflective polarizer are sequentially stacked on the light control film in that order to prepare an optical element composite. Next, an original film of a multilayer film including a polypropylene film and a polyethylene film was prepared and two rectangular films were cut out from this original film. A sample of the packaging component was taken from the end-most portion of the original film in the width direction. In Samples 10 to 14 described below, samples of the packaging component were taken in the similar manner but by changing the position of sampling gradually toward the center of the original film.

Next, as shown in Table 1, the two films were superimposed so that the angle formed between the orientation axes was 0° to 20°, and three sides were heat-sealed while leaving one long side open. As a result, a bag-shaped packaging component was obtained. Next, the optical element composite was inserted into the packaging component from the open long side. The open long side was then heat-sealed to seal the packaging component. As a result, an optical element package was obtained. It should be noted that a shrinkage allowance of 40 mm was saved at the long sides and a shrinkage allowance of 23 mm was saved at the short sides of the packaging component. Here, "shrinkage allowance" refers to the difference in size between the supporting member and the packaging component and is a figure that does not include welding portions. Next, openings were formed at positions corresponding to the corners of the packaging component. The optical element package was transferred into an oven to shrink the packaging component at a temperature of 105°C. As a result, the optical element composite and the packaging component were closely adhered to each other, and the corners of the optical element composite were exposed in the openings formed in the corner portions of the packaging component.

As a result, a target optical element package was obtained.

Samples 10 to 14

Samples were taken from the above-described original film of the packaging component as in Sample 9 but by shifting positions of sampling from the end side toward the central portion from one sample to another and setting the shrinkage allowance to 40 mm at the long sides and to 23 mm at the short sides of the packaging component. Here, "shrinkage allowance" refers to the difference in size between the supporting member and the packaging component and is a figure that does not include welding portions.

Measurement of slope of residual shrinkage of packaging component

First, one end of the optical element package was opened, and the content was taken out. Subsequently, a square packaging component sample 300 mm $\times$ 300 mm in size was cut out from the center portion of a main surface. The packaging component sample was then retained at 85°C for 24 hours to conduct heat shrinking, and the change in dimensions caused by the heat shrinking was measured with a vernier caliper. The results are shown in Table 1.

Evaluation of warpage

As in Samples 1 to 8, the warpage of the optical element package was measured. The results are shown in Table 2.

Mounting test evaluation

As in Samples 1 to 8 described above, the appearance of the panel display was evaluated. The results are shown in Table 2.

Table 2

| | Material | Change in tanθ = $\Delta$m/L) after 85°C $\times$ 24 h | Warpage of optical element package (mm) | Optical element package appearance | Appearance as mounted in actual liquid crystal display |
|---|---|---|---|---|---|
| Sample 9 | Polyolefin (PP/PE) | $7.9 \times 10^{-3}$ | 4 | 1 | 2 |

(continued)

|  | Material | Change in tanθ = $\Delta m/L$) after 85°C $\times$ 24 h | Warpage of optical element package (mm) | Optical element package appearance | Appearance as mounted in actual liquid crystal display |
|---|---|---|---|---|---|
| Sample 10 | Polyolefin (PP/PE) | $5.4 \times 10^{-3}$ | 3 | 1 | 2 |
| Sample 11 | Polyolefin (PP/PE) | $5 \times 10^{-3}$ | 2 | 2 | 4 |
| Sample 12 | Polyolefin (PP/PE) | $3.1 \times 10^{-3}$ | 1 | 3 | 5 |
| Sample 13 | Polyolefin (PP/PE) | $2.1 \times 10^{-3}$ | 0.5 | 3 | 5 |
| Sample 14 | Polyolefin (PP/PE) | $0.6 \times 10^{-3}$ | 0.5 | 3 | 5 |

Table 2 shows the following.

At a ratio $\Delta m/L$ exceeding $5 \times 10^{-3}$, the warpage of the optical element package increases and deflection and wrinkling tend to occur in the optical element package. In mount test, the display characteristics also tend to deteriorate.

Thus, in order to suppress luminance nonuniformity caused by sagging, nonuniformity, and wrinkling of the optical element package and to suppress degradation of the image quality, it is preferable to adjust the ratio $\Delta m/L$ (=tanθ) to $5 \times 10^{-3}$ or less.

Although the embodiments are described specifically above, the present invention is not limited to these embodiments, and various alternations and modifications are possible based on the technical idea of the present invention.

For example, the figures described in the embodiments are merely examples and different figures may be employed if necessary.

**Claims**

1.  An optical element package comprising:

    at least one optical element;
    a supporting member that supports the at least one optical element; and
    a packaging component having shrinkability that packages the at least one optical element and the supporting member,
    wherein the supporting member has two main surfaces having a rectangular shape, and
    an angle formed between an orientation axis of a main surface portion of the packaging component and a side surface of the supporting member is 8° or less.

2.  The optical element package according to claim 1, wherein the angle is 3.5° or less.

3.  The optical element package according to claim 1, wherein the packaging component has heat shrinkability.

4.  The optical element package according to claim 1, wherein the packaging component has shrinkability for stretch packaging.

5.  The optical element package according to claim 1, wherein the packaging component has a first region and a second region that respectively cover the two main surfaces of the supporting member, and
    at least one of the first region and the second region is provided with an optical functional layer.

6.  An optical element package comprising:

    at least one optical element;

a supporting member that supports the at least one optical elements; and
a packaging member having shrinkability that packages the at least one optical element and the supporting member,
wherein tanθ = Am/L satisfies the relationship

$$-0.005 \leq \tan\theta = \Delta m/L \leq 0.005$$

where L is a length of one side of the packaging component and Δm is a residual shrinkage deviation of a side intersecting the side having the length L.

7. The optical element package according to claim 6, wherein the packaging component has heat shrinkability.

8. The optical element package according to claim 6, wherein the packaging component has shrinkability for stretch packaging.

9. The optical element package according to claim 6, wherein the packaging component has a first region and a second region that respectively cover the two main surfaces of the supporting member, and
at least one of the first region and the second region is provided with an optical functional layer.

10. The optical element package according to any one of claims 1 to 9, wherein the packaging component has at least one hole.

11. The optical element package according to claim 8, wherein the at least one hole is positioned at a corner/curved portion of the supporting member.

12. A backlight comprising the optical element package according to any one of claims 1 to 9.

13. A liquid crystal display comprising the optical element package according to any one of claims 1 to 9.

# FIG. 1

## FIG. 2A

## FIG. 2B

# FIG. 3

22

24d
23a
24a
24b
24c

# FIG. 4

# FIG. 5

FIG. 6A

FIG. 6B

# FIG. 7

# FIG. 8

**FIG. 9**

22

24d
23a
24a
24b
24c

21

**FIG. 10**

22

24d
23a
24a
24b
24c

# FIG. 11

FIG. 12A

FIG. 12B

# FIG. 13

104

103

102

101

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007246294 A
- JP 2005301147 A